# EUROPÄISCHE PATENTSCHRIFT

(11) **EP 3 093 116 B1**
(45) Veröffentlichungstag und Bekanntmachung des Hinweises auf die Patenterteilung: **31.01.2018**
(21) Anmeldenummer: 15184736.5
(22) Anmeldetag: 10.09.2015
(51) Int. Cl.: B29C 45/16, B60J 10/00

(54) **HERSTELLUNGSVERFAHREN FÜR DICHTUNGSPROFILE**
METHOD OF MAKING SEALING PROFILES
PROCEDE DE FABRICATION DE PROFILES D'ETANCHEITE

(30) Priorität: 13.05.2015 EP 15167615
(43) Veröffentlichungstag der Anmeldung: 16.11.2016
(60) Teilanmeldung: 17174812.2
(73) Patentinhaber: Stefan Pfaff Werkzeug- und Formenbau GmbH & Co. KG, 88167 Röthenbach (DE)
(72) Erfinder: Sutter, Anton, 88171 Weiler-Simmerberg (DE)
(74) Vertreter: Otten, Roth, Dobler & Partner mbB Patentanwälte

(56) Entgegenhaltungen:
- EP-A1- 0 372 745
- EP-A1- 1 587 183
- EP-A2- 1 045 174
- WO-A1-2006/046133
- WO-A1-2012/153234
- DE-A1- 2 747 157
- DE-A1-102005 020 200
- DE-A1-102011 050 752
- DE-C- 925 153
- FR-A- 1 162 423
- FR-A- 1 193 164
- FR-A1- 2 668 095

## Beschreibung

Die Erfindung betrifft ein Verfahren zur Herstellung eines positionierbaren Dichtungsprofils für Fahrzeugtüren nach dem Oberbegriff des Anspruchs 1.

Aus dem Stand der Technik ist bekannt, Dichtungsprofile, zum Beispiel für Fahrzeugtüren, zu fertigen, indem einzelne Profilteile an ein erstes Profil, ein sogenanntes zentrales Profil, oder erstes Profil angespritzt werden. Um einen solchen Anspritzvorgang durchzuführen, wird das zentrale Profil in eine Form geschoben bzw. die Form wird auf das Profil aufgeschoben, während das anzuspritzende Profil ebenfalls in der Form aufgenommen und so positioniert wird, dass es an der gewünschten Stelle des ersten Profils angespritzt werden kann. Um einen weiteren Anspritzvorgang vorzunehmen, wird das Profil davon entnommen, und anschließend wird eine weitere Form aufgeschoben, um ein anderes Profil mit dem ersten Profil zu verbinden. Auch separate Anspritzvorgänge, mit denen kein Profil angefügt wird, sondern lediglich zum Beispiel das Ende eines Profils mit einem Kunststoffabschluss versehen wird, können durchgeführt werden.

Aus der DE 10 2005 020 200 A1 ist ein Verfahren zur Herstellung von Mehrkomponenten-Bauteilen bekannt, bei dem zunächst ein Grundkörper in einem gesonderten Spritzgießprozess gefertigt wird. Auch die DE 10 2011 050 752 A1, welche die Herstellung einer Scheibeneinheit eines Fahrzeugfensters (Seitenfensters) beschreibt, geht auf die Verwendung eines 2K-Spritzgussverfahrens ein, bei dem getrennt voneinander eine Hartkomponente und eine Weichkomponente angespritzt werden.

Aufgabe der Erfindung ist es, bei der Herstellung und Weiterverarbeitung derartiger Dichtungsprofile geringere Toleranzen einhalten zu können.

Die Aufgabe wird, ausgehend von einem Herstellungsverfahren der eingangs genannten Art, durch die kennzeichnenden Merkmale des Anspruchs 1 gelöst.

Durch die in den abhängigen Ansprüchen genannten Maßnahmen sind vorteilhafte Ausführungen und Weiterbildungen der Erfindung möglich.

Das erfindungsgemäße Herstellungsverfahren dient zur Herstellung eines positionierbaren Dichtungsprofils für Fahrzeugtüren. Derartige Dichtungsprofile werden an der Karosserie entlang der Türkanten eingefügt und sorgen unter anderem dafür, dass keine Feuchtigkeit ins Fahrzeuginnere eindringt bzw. dass der Fahrzeuginnenraum gegenüber außen abgedichtet ist. Bei der Herstellung wird üblicherweise ein Profilstrang verwendet, der auch als zentrales Profil oder erstes Profil bezeichnet wird. In der Regel ist es günstiger, das gesamte Profil nicht aus einem Profilstrang zu fertigen, sondern ein oder mehrere Profilteile anzufügen. Dieses Anfügen wird durch einen Anspritzvorgang vorgenommen, d.h., das erste Profil und das anzuspritzende Profilteil werden in eine Form gebracht und der Zwischenbereich entsprechend durch das im Spritzvorgang verwendete Kunststoff- bzw. Gummimaterial ausgefüllt, dass beide miteinander in Verbindung stehen. Gerade bei Endbereichen ist es oft nicht ausreichend, dass der Profilstrang lediglich an dieser Stelle zugeschnitten ist, sondern das Ende muss eine gewisse Form aufweisen. Auch hier erfolgt eine Anspritzung mit dem entsprechenden Kunststoff bzw. Gummi.

Bei dem erfindungsgemäßen Herstellungsverfahren wird entsprechend das erste Profil in ein Werkzeug eingebracht und gehaltert bzw. eingespannt. Je nach Art des Verfahrens kann das Profil in die Form hineingelegt werden; oftmals wird das Profil aber in die Form eingeschoben, oder die Form wird auf das Profil aufgeschoben. Bei dem Werkzeug handelt es sich in der Regel um eine Form zur halternden Aufnahme von Dichtungsprofilen und zu deren Weiterverarbeitung bzw. um eine entsprechende Aufnahmevorrichtung hierzu. Das Profil wird im Übrigen oftmals nicht vollständig in einer Form aufgenommen, sondern in der Regel nur ein bestimmter Bereich, zum Beispiel der Endbereich des Profils, in dem gerade auch der Anspritzvorgang zum Anfügen eines weiteren Profilteils oder zur Durchführung einer Endanspritzung stattfinden soll. Das Werkzeug wird anschließend in eine Spritzmaschine eingebracht, die den eigentlichen Anspritzvorgang vornimmt.

Gegebenenfalls kann auch noch ein weiterer Verarbeitungsschritt am eingespannten Profil erfolgen, beispielsweise ein Zuschneiden des Profils.

Das erfindungsgemäße Herstellungsverfahren zeichnet sich insbesondere dadurch aus, dass nach der Einbringung des ersten Profils in das Werkzeug anschließend wenigstens zwei Anspritzvorgänge durchgeführt werden, bevor das Werkzeug wieder geöffnet wird bzw. ohne das Dichtungsprofil in ein anderes Werkzeug stattdessen umzuspannen. Diese beiden Anspritzvorgänge in ein und demselben Werkzeug können beide somit grundsätzlich parallel bzw. gleichzeitig ausgeführt werden. Denkbar ist auch, dass die Vorgänge in zeitlicher Hinsicht zwar nacheinander erfolgen, etwa bedingt durch fertigungstechnische Gründe, das Profil aber nicht in ein anderes Werkzeug umgespannt bzw. aus dem Werkzeug entnommen und in ein anderes Werkzeug eingebracht werden muss. Insbesondere dann, wenn der für die wenigstens zwei Anspritzvorgänge, die in demselben Werkzeug durchgeführt werden, benötigte Aufwand unterschiedlich groß ist oder unterschiedliche Kunststoffe bzw. Gummi angespritzt werden, können die Vorgänge sich zwar zeitlich gegebenenfalls überlappen, beginnen jedoch unter Umständen nicht zum gleichen Zeitpunkt und/oder sind nicht zum gleichen Zeitpunkt abgeschlossen.

Darüber hinaus ist es auch Kern der Erfindung, dass bei einem der wenigstens zwei Anspritzvorgänge ein weiteres Profilteil an das erste angespritzt wird und bei einem anderen der mindestens zwei Anspritzvorgänge ein Positionierpin seitlich an das erste Profil und/oder das weitere Profilteil angespritzt wird. Der Positionierpin ist dazu ausgebildet, als Anschlag zur Positionierung am Fahrzeug bzw. in einem Werkzeug verwendet zu werden. Bei einem derartigen Positionierpin handelt es sich um ein angespritztes Teil, das beispielsweise als Kunststoff-Lasche seitlich am Profil angefügt wird. Dieser Positionierpin kann als Positionsreferenz verwendet werden, und zwar in mehrfacher Hinsicht: Zunächst kann er als Positionsreferenz am Fahrzeug bzw. an der Fahrzeugkarosserie dienen. An der Fahrzeugkarosserie kann dafür beispielsweise ein Anschlag oder eine Ausnehmung vorbereitet sein, gegen die der Positionierpin gefahren wird bzw. in die der Positionierpin eingebracht wird. Da der Positionierpin als Referenz dient, besitzt somit das zu installierende Dichtungsprofil am Fahrzeug eine präzise definierte Position.

Der Positionierpin kann zur Positionierung in einem weiteren Werkzeug verwendet werden. Es ist zum Beispiel denkbar, dass in den weiteren Fertigungsverfahren das Dichtungsprofil in ein anderes Werkzeug umgespannt werden soll, etwa dann, wenn weitere Profilteile im Bereich einer Säule (z.B. der B- oder C-Säule des Fahrzeugs) angespritzt werden und diese vergleichsweise weit von der zuvor durchzuführenden Anspritzung, für welche das Profil bereits eingespannt wurde, entfernt sind. Auch in diesem Fall ist es jedoch möglich, den Positionierpin als Positionsreferenz in dem weiteren Werkzeug zu verwenden, sodass die weitere Anspritzung oder der weitere Verarbeitungsschritt positionsgenau in Bezug auf den Positionierpin durchgeführt werden kann.

Das erfindungsgemäße Herstellungsverfahren ermöglicht zum einen also, dass der im gleichen Werkzeug durchgeführte Anspritzvorgang, der zusammen mit dem Anspritzen des Positionierpins durchgeführt wird, sehr positionsgenau erfolgen kann.

Darüber hinaus kann durch das erfindungsgemäße Herstellungsverfahren aber auch eine Zeitersparnis bei der Fertigung erreicht werden, weil zwischen den beiden Verarbeitungs- bzw. Anspritzvorgängen kein Umspannen des Profils in ein anderes Werkzeug erfolgt.

Bei einer Ausführungsform der Erfindung ist der Positionierpin aus einem anderen Material, insbesondere aus einem anderen Kunststoff, angespritzt als das Profilteil. Vorzugsweise kann für den Positionierpin Polypropylen verwendet werden. Insbesondere kann es vorteilhaft sein, den Positionierpin aus einem härteren Material zu spritzen als das sonstige, für das verbleibende Dichtungsprofil verwendete Material. Denn das Handling des Positionierpins in der Funktion als Anschlag oder als in eine Ausnehmung bzw. Öffnung einzufügendes Teil hierdurch verbessert bzw. vereinfacht werden kann. Bei der Anspritzung unterschiedlicher Materialien ist zu beachten, dass regelmäßig unterschiedliche Verarbeitungszeiten auftreten können und auch die Anspritzung bei unterschiedlichen Temperaturen erfolgen kann.

Besonders vorteilhaft kann das Herstellungsverfahren an einem der Enden des ersten Profils durchgeführt werden, sodass hier eine Dichtungsprofilecke entsteht. In den Ecken ist es oftmals für eine genaue Positionierung nicht ausreichend, das Profil bei der Fertigung solange in die Form einzuschieben, bis das Ende an der Innenwand der Form anschlägt, weil zum einen Zuschneidetoleranzen berücksichtigt werden müssen und zum anderen im Falle von Endanspritzungen auch deren Fertigung die Toleranzen noch einmal erhöhen könnte.

Dementsprechend erfolgt ein Verfahren zur Positionierung eines Dichtungsprofil für Fahrzeugtüren in einem Werkzeug unter Verwendung eines Dichtungsprofils mit einem daran angebrachten Positionierpin, wobei als Werkzeug ein solches verwendet wird, das einen Anschlag bzw. eine Ausnemung / Öffnung aufweist, und der Positionierpin gegen den Anschlag gefahren bzw. in die Ausnehmung / Öffnung eingebracht wird, sodass der Positionierpin und somit das Dichtungsprofil eine definierte Position in Bezug auf das Werkzeug erhält. Durch dieses Positionierungsverfahren wird gleichermaßen wie beim erfindungsgemäßen Herstellungsverfahren eine Verringerung der Fertigungstoleranzen ermöglicht, d.h. die Dichtungsprofile können viel genauer gefertigt werden und es kann noch eher garantiert werden, dass die Dichtungen in die entsprechenden Fahrzeuge auch bei einer Massenfertigung problemlos eingesetzt werden können.

In analoger Weise zum erfindungsgemäßen Herstellungsverfahren wird auch hier in vorteilhafter Weise der Positionierpin, der eigentlich zur genauen Positionierung in der Karosserie vorgesehen ist, dazu verwendet, eine genaue Positionierung im Werkzeug vorzunehmen. Beim erfindungsgemäßen Herstellungsverfahren hatte die zweite Anspritzung, etwa eine Endanspritzung oder die Anspritzung eines weiteren Profils, eine genaue Position in Bezug auf den Positionierpin, weil beide im gleichen Werkzeug gefertigt werden. Bei dem erfindungsgemäßen Positionierverfahren wird der gleiche Vorteil dahingehend ausgenutzt, dass auch dann, wenn das Profil umgespannt werden muss, der Positionierpin im Werkzeug als Positionsreferenz dient, was zu einer erhöhten Genauigkeit führt.

Darüber hinaus kann auch beim Umspannen des Profils auf ein anderes Werkzeug ein Zeitvorteil erreicht werden, weil (insbesondere bei einer automatisierten Umspannung) dieser Umspannprozess auf den Positionierpin als Referenz abstellen kann. Dazu kann beispielweise der Positionierpin optisch erfasst oder der Anschlag durch Drucksensoren usw. detektiert werden. Dies erleichtert den Automatisierungsvorgang und kann die Fertigung beschleunigen, weil sensorisch erfassbar ist, wann das Dichtungsprofil die richtige Position im Werkzeug hat.

Der Positionierpin muss aber nicht unbedingt an das zentrale bzw. erste Profil angespritzt sein. Es ist auch denkbar, dass der Positionierpin an einem Profilteil angespritzt ist und dann als Referenz verwendet wird. Insbesondere auch dann, wenn das erst Profil in ein Werkzeug eingebracht wird und anschließend das zusätzliche Profilteil in das Werkzeug eingebracht wird, ist es zur Verbesserung der Genauigkeit wichtig, dass sowohl das erste Profil als auch das Profilteil eine korrekte Positionierung vor dem Start des Anspritzvorgangs eingenommen haben. Zur korrekten Positionierung kann somit ein Positionierpin nicht nur am ersten Profil, sondern auch am zusätzlichen Profilteil, welches angespritzt wird, verwendet werden.

Wie bereits oben dargestellt, kann bei einem Positionierverfahren insbesondere ein Positionierpin verwendet werden, der aus einem anderen Material, wie beispielsweise Polypropylen, angespritzt ist als das übrige Dichtungsmaterial. Insbesondere können dadurch die Eigenschaften als Anschlag oder die Detektion des Anschlags des Positionierpins erleichtert bzw. verbessert werden, weil die Positionierung bei Verwendung eines härteren Materials als Anschlag oder Fügelasche ein besseres Handling, aber auch ein genaueres Positionieren erfolgen kann als bei einem weichen, biegsamen Material.

### Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:
- Figur 1: eine Anordnung einer Aufnahmevorrichtung in einer Spritzmaschine,
- Figur 2: zeigt eine schematische Darstellung einer Form einer Aufnahmevorrichtung,
- Figur 3: eine weitere Anordnung einer Aufnahmevorrichtung in einer Spritzmaschine, sowie
- Figur 4: eine Form mit einem Anschlag für einen Positionierpin und
- Figur 5: eine Form mit einer Ausnehmung zur Aufnahme eines Positionierpins.

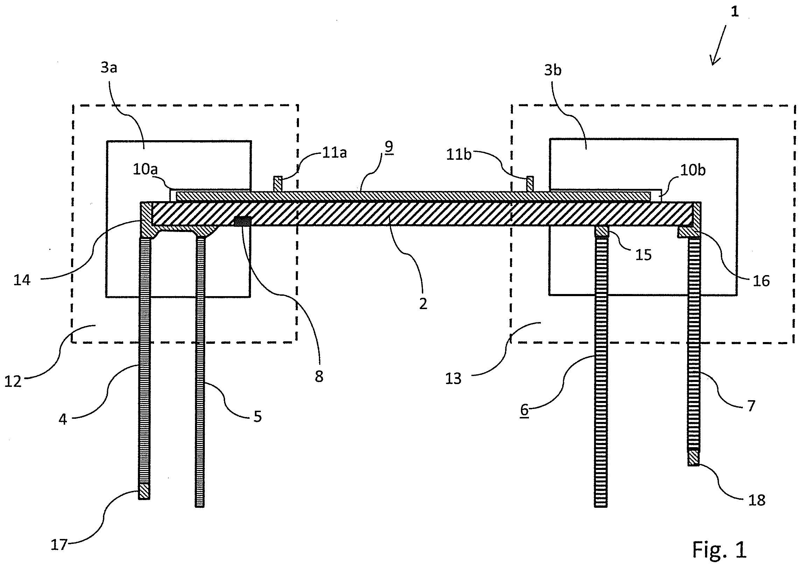

Figur 1 zeigt eine Aufnahmevorrichtung 1, in die ein erstes, zentrales Profil 2 eingebracht ist. Die Aufnahmevorrichtung 1 umfasst zwei Formen 3a und 3b, wobei das erste Profil an seinem linken Ende in der Form 3a und an seinem zweiten Ende in der Form 3b gelagert ist. An das erste Profil 2 sollen die Profile 4, 5, 6 und 7 angespritzt werden, wobei die Profile 4, 5 dazu in der Form 3a gelagert und an dem dortigen Ende angespritzt werden können, während die Profile 6, 7 über die Form 3b mit dem ersten Profil 2 verbunden werden können. Beim Anspritzvorgang in der Form 3a wird zusätzlich ein Positionierpin 8 angespritzt. Der Positionierpin 8 wird mit einer anderen Komponente angespritzt als die Profile 4, 5, 6 und 7.

Zwischen den Formen 3a und 3b ist eine Verbindungsvorrichtung 9 angeordnet. Jede der Formen 3a, 3b weist eine Aufnahmeöffnung 10a, 10b auf, in die sowohl das entsprechende Ende des ersten Profils 2 als auch der entsprechende Teil der Verbindungsvorrichtung 9 eingebracht ist. Das erste Profil 2 wird formstabil zwischen den beiden Formen gelagert, indem es an der Verbindungsvorrichtung 9 anliegt. Die Verbindungsvorrichtung 9 wiederum ist zwischen den Anschlägen 11a und 11b leicht verschiebbar, sodass entsprechend auch eine leichte Anpassung des Abstandes zwischen den beiden Formen 3a und 3b gemäß der Länge des ersten Profils 2 sowie gemäß des Abstandes der beiden Spritzmaschinen 12, 13 angepasst und gewählt werden kann.

Die beiden Spritzmaschinen 12, 13 sind fest zueinander positioniert und haben einen definierten Abstand. Auch im Bereich des ersten Profils 2 sind nun fest definierte Abstandsangaben vorgegeben, durch deren Aufteilung insgesamt eine genauere Toleranz erreicht werden kann. Geht man zum Beispiel vom linken Anschlag im Bereich der Form 3a aus, so kann eine Positionierung zum Beispiel relativ zum Positionierpin 8 erfolgen. Die Profile 6 und 7 können grundsätzlich in Bezug auf zwei Bezugspunkte positioniert werden, nämlich zum einen zum linken Anschlag innerhalb der Form 3a und zum anderen in Bezug auf den Positionierpin 8. Die Profile 4, 5, 6, 7 sind im Verbindungsbereich zum ersten Profil jeweils an den Stellen 14, 15 und 16 angespritzt. Diese Stellen 14, 15, 16 werden mit einem/mehreren thermoplastischen Elastomer/Elastomeren angespritzt.

Im vorliegenden Fall ist es auch möglich, zwei verschiedene Komponenten in einer der Formen 3a bzw. 3b oder auch in den jeweiligen Formen untereinander anzuspritzen. Diese Anspritzung kann gleichzeitig erfolgen, und dies ist in vorteilhafter Weise auch dann möglich, wenn die Verarbeitungszeit unterschiedlich lang ist. Der Positionierpin 8 wird mit einem anderen Kunststoff angespritzt, z.B. PP (Polypropylen).

Darüber hinaus können grundsätzlich auch Kunststoffe im Endbereich von Profilen, sei es im Endbereich des ersten, zentralen Profils oder im Endbereich eines anderen Nebenprofils angespritzt werden. Derartige Bereiche, die im vorliegenden Fall auch schon vorher angespritzt werden konnten, befinden sich zum Beispiel an den Endbereichen des Profils 4 die Stelle 17 und im Endbereich des Profils 7 die Stelle 18. Im vorliegenden Fall handelt es sich bei dem Gesamtprofil, bestehend aus den Einzelprofilen 2, 4, 5, 6, 7 um ein Dichtungsprofil für eine Fahrzeugtür, wobei der Teil im Bereich der Form 3a für die B-Säule und der Bereich im Zusammenhang mit der Form 3b für die C-Säule verwendet wird.

Die Verfahren, sowohl das Herstellungs- als auch das Positionierverfahren, können grundsätzlich auch ohne die Verbindungsvorrichtung 9 erfolgen. Im Beispiel nach Figur 1 ist das Werkzeug aber dazu ausgebildet, eine Doppelanspritzung auf zwei Spritzmaschinen nebeneinander durchzuführen.

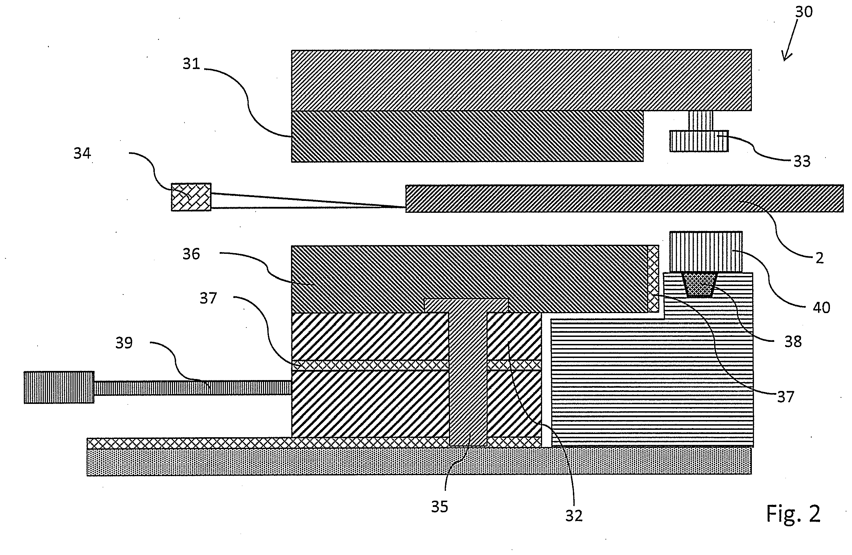

Figur 2 zeigt eine Form 30 mit einem Oberteil 31 und einem Unterteil 32, wobei das Oberteil 31 einen Andrücker 33 zum Andrücken des Profils 2 umfasst. Die Position des Profils 2 wird über einen mit Laser betriebenen optischen Abstandssensor 34 bestimmt und positioniert. Im Unterteil 32 ist ein Auswerfer 35 integriert. Das Profil 2 wird im Bereich des Formteils 36 mit EPDM angespritzt. Im Bereich des Formteils 38 wird der Positionierpin wiederum angespritzt. Zur Isolierung sind Isolierungsbereiche 37 vorgesehen. Die Anspritzung mit EPDM im Formteil 36 erfolgt bei wesentlich höheren Temperaturen als bei PP im Bereich 38. Ein Endbereich 56 kann zum Beispiel als Anschlag zur Positionierung auch verwendet werden. Grundsätzlich haben in vorteilhafter Weise Beschnitttoleranzen in der Regel keine Auswirkung auf die Längenmaße. Während auf einer Seite ein Ende (zum Beispiel das Ende 56) als Anschlag zur Positionierung dienen kann, wobei dort im vorliegenden Fall gemäß Figur 2 ohnehin eine Anspritzung erfolgt, kann auf der Gegenseite eine Längenkontrolle mit Hilfe eines optischen Abstandsensors 34 vorgenommen werden. Dadurch, dass der Positionierpin 8 als Profilaufnahme verwendet werden kann, ist nochmals eine genauere Positionierung des Profils in Fertigung möglich. Der mechanische Antrieb für den Auswerfer 35 kann über einen Zylinder 39 bzw. mechanisch erfolgen. Die Klappen 40 stützen gegen den Spritzdruck ab.

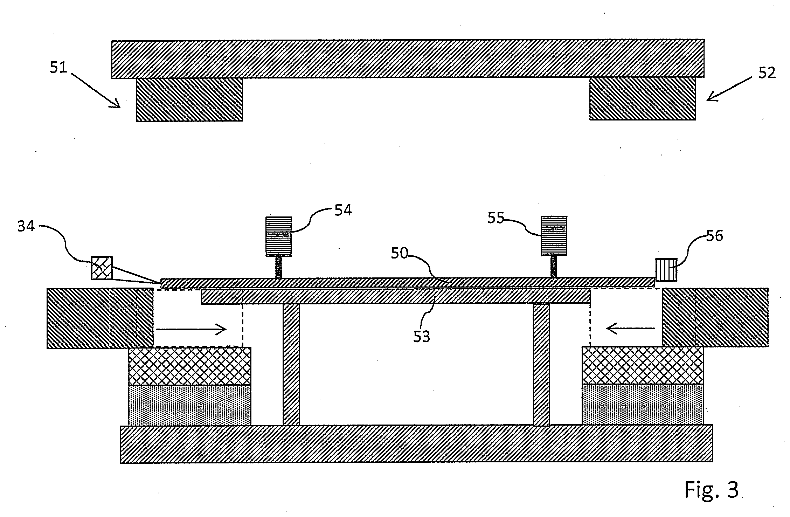

Figur 3 zeigt ein Dachprofil 50, das zwischen zwei Formen 51, 52 gelagert ist und über eine Verbindungsvorrichtung 53 formstabil gehalten wird. In den Bereichen 54, 55 erfolgt eine Profilklemmung. Im rechten Bereich des Profils 50 (gemäß Fig. 3) ist an dessen Ende eine Anspritzung 56 vorgenommen worden. Dieses Ende 56 des Profils 50 dient als Anschlag in der Form 52 zur weiteren Positionierung. Am anderen Ende des Profils 50 erfolgt eine Längen-/Positionskontrolle über den optischen Sensor 34. Die Formen 51, 52 werden jeweils auf das Dachprofil 50 auf beiden Seiten jeweils aufgeschoben. Die Genauigkeit der Positionierung ist dadurch in der Regel besonders gut. Die Positionierung kann vollständig automatisch erfolgen. In vorteilhafter Weise können TPE, das einen anderen Prozessablauf erfordert, und EPDM parallel angespritzt werden (Simultananspritzung) .

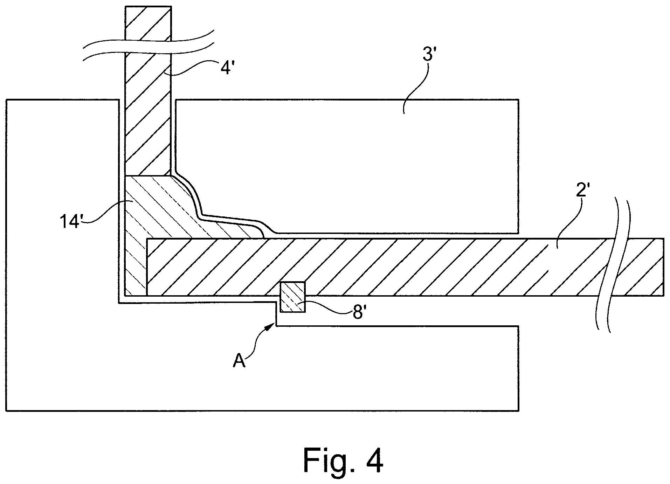

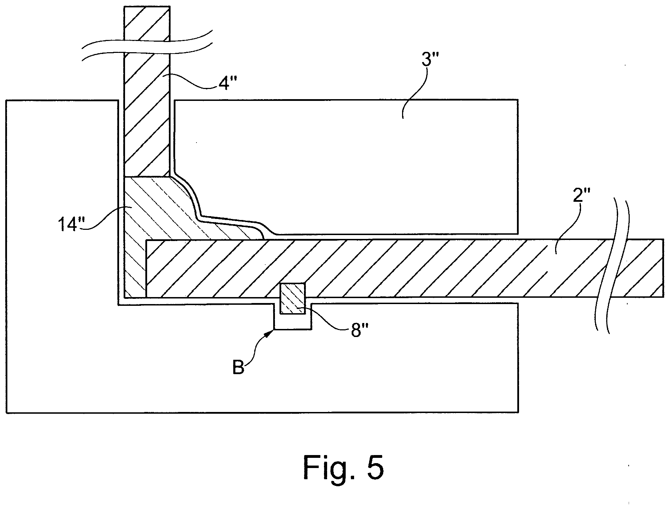

Die Figuren 4 und 5 veranschaulichen Beispiele von Positionierverfahren: Beide zeigen schematische Darstellungen von Werkzeugformen 3' bzw. 3", in welche jeweils ein erstes Profil 2' bzw. 2" und ein weiteres Profilteil 4' bzw. 4" eingespannt sind. Die weiteren Profilteile 4' und 4" werden in den jeweiligen Formen 3' und 3" an das erste Profil 2' bzw. 2" angespritzt, und zwar in den Bereichen (Anspritzungen) 14' und 14". Am ersten Profil 2', 2" ist jeweils ein Positionierpin 8', 8" angespritzt. Wird die Form 3' in Figur 4 auf das erste Profil 2' geschoben, dient der Bereich A als Anschlag, sodass dann, wenn das Profil 2' mit dem Positionierpin 8' am Anschlag A anschlägt, eine definierte Position des Profils 2' im Werkzeug 3' vorliegt. In Figur 5 kann stattdessen der Positionierpin 8" wie eine Lasche in die Ausnehmung B eingesetzt werden, um die gewünschte Positionierung des Profils 2" im Werkzeug 3" zu erlangen.

### Bezugszeichenliste:

- 1: Aufnahmevorrichtung
- 2: erstes / zentrales Profil
- 2': erstes / zentrales Profil
- 2": erstes / zentrales Profil
- 3a: Form
- 3b: Form
- 3': Form
- 3": Form
- 4: Nebenprofil
- 4': anzuspritzendes Profilteil
- 4": anzuspritzendes Profilteil
- 5: Nebenprofil
- 6: Nebenprofil
- 7: Nebenprofil
- 8: Positionierpin
- 8': Positionierpin
- 8": Positionierpin
- 9: Verbindungsvorrichtung
- 10a: Aufnahmeöffnung
- 10b: Aufnahmeöffnung
- 11a: Anschlag
- 11b: Anschlag
- 12: Spritzmaschine
- 13: Spritzmaschine
- 14: Anspritzungen zur Profilverbindung
- 14': Anspritzungen zur Profilverbindung
- 14": Anspritzungen zur Profilverbindung
- 15: Anspritzungen zur Profilverbindung
- 16: Anspritzungen zur Profilverbindung
- 17: Endanspritzungen
- 18: Endanspritzungen
- 30: Form
- 31: Oberteil
- 32: Unterteil
- 33: Andrücker
- 34: optischer Wegsensor
- 35: Auswerfer
- 36: EPDM-Anspritzung/Formteil
- 37: Isolierung
- 38: Formteil (Positionierpin)
- 39: Zylindermechanik
- 40: Klappen
- 50: Dachprofil
- 51: Form
- 52: Form
- 53: Verbindungsvorrichtung
- 54: Profilklemmung
- 55: Profilklemmung
- 56: Endanschlag

- A: Anschlag
- B: Ausnehmung

## Patentansprüche

1. Verfahren zur Herstellung eines positionierbaren Dichtungsprofils für Fahrzeugtüren, mit einem ersten Profil (2, 2', 2"), **dadurch gekennzeichnet, dass** das erste Profil (2, 2', 2") in ein Werkzeug (3a, 3b, 3', 3"), insbesondere eine Aufnahmevorrichtung und/oder eine Form zur halternden Aufnahme von Dichtungsprofilen und zu deren Weiterverarbeitung, insbesondere zum Anspritzen weiterer Profile und/oder Profilteile in einer Spritzmaschine und/oder zum Zuschneiden der Dichtungsprofile, eingebracht und gehaltert wird und anschließend wenigstens zwei Anspritzvorgänge durchgeführt werden, bevor das Werkzeug (3a, 3b, 3', 3") wieder geöffnet und/oder ohne dass das Dichtungsprofil in ein anderes Werkzeug stattdessen umgespannt wird, wobei bei einem der wenigstens zwei Anspritzvorgänge ein weiteres Profilteil (4, 5, 6, 7, 4', 4") an das erste Profil (2, 2', 2") angespritzt wird und bei einem anderen der wenigstens zwei Anspritzvorgänge ein Positionierpin (8, 8', 8") seitlich an das erste Profil (2, 2', 2") und/oder an das weitere Profilteil (4, 5, 6, 7, 4', 4") angespritzt wird, der dazu ausgebildet ist, als Anschlag zur Positionierung am Fahrzeug und/oder in einem Werkzeug (3', 3") verwendet zu werden.

2. Verfahren zur Herstellung nach Anspruch 1, **dadurch gekennzeichnet, dass** der Positonierpin (8, 8', 8") aus einem anderen Material, insbesondere aus einem anderen Kunststoff angespritzt wird als das Profilteil, vorzugsweise aus Polypropylen.

3. Verfahren zur Herstellung nach einem der vorgenannten Ansprüche, **dadurch gekennzeichnet, dass** das Profilteil (4, 5, 6, 7, 4', 4") an einem der Enden des ersten Profils (2, 2', 2") angespritzt wird, sodass eine Dichtungsprofilecke gebildet wird.

## Claims

1. A method for producing a positionable sealing profile for vehicle doors, with a first profile (2, 2', 2"), **characterised in that** the first profile (2, 2', 2") is inserted into and held to a tool (3a, 3b, 3', 3"), in particular a receiving device and/or a form for the holding reception of sealing profiles and to the processing thereof, in particular for the injecting of further profiles and/or profile parts in a injecting machine and/or for the cutting to size of the sealing profiles, and then at least two injection processes are carried out before the tool (3a, 3b, 3', 3") is opened again and/or without the sealing profile being instead encompassed in another tool, wherein, during one of the at least two injection processes, a further profile part (4, 5, 6, 7, 4', 4") is injected onto the first profile (2, 2', 2") and, during another of the at least two injection processes, a positioning pin (8, 8', 8") is laterally injected onto the first profile (2, 2', 2") and/or onto the further profile part (4, 5, 6, 7, 4', 4"), which is designed for being used as a stop for positioning on the vehicle and/or in a tool (3', 3").

2. The method of production according to claim 1, **characterised in that** the positioning pin (8, 8', 8") made out of a different material from the profile part, in particular out of a different plastic, preferably out of polypropylene, is injected on.

3. The method of production according to one of the aforementioned claims, **characterised in that** the profile part (4, 5, 6, 7, 4', 4") is injected onto one of the ends of the first profile (2, 2', 2") so that a corner of a sealing profile is formed.

## Revendications

1. Procédé de fabrication d'un profil d'étanchéité positionnable pour des portes de véhicules, avec un premier profil (2, 2', 2"), **caractérisé en ce que** le premier profil (2, 2', 2") est introduit et maintenu dans un moule (3a, 3b, 3', 3"), en particulier un dispositif de réception et/ou une forme destinée à loger les profils d'étanchéité de sorte à les maintenir et destinée à leur traitement ultérieur, en particulier pour l'injection d'autres profils et/ou parties profilées dans une machine d'injection et/ou pour couper des profils d'étanchéité, et par la suite au moins deux opérations d'injection sont effectuées avant que le moule (3a, 3b, 3', 3") ne soit réouvert et/ou sans que le profil d'étanchéité ne soit plutôt serré dans un autre moule, où, lors d'une première des au moins deux opérations d'injection, une autre partie profilée (4, 5, 6, 7, 4', 4") est injectée sur le premier profil (2, 2', 2") et lors de l'autre des au moins deux opérations d'injection un pion (8, 8', 8") est injecté latéralement sur le premier profil (2, 2', 2") et/ou sur l'autre partie profilée (4, 5, 6, 7, 4', 4"), laquelle est conçue de sorte à pouvoir être utilisée en tant que butée pour le positionnement au niveau du véhicule et/ou dans un moule (3', 3").

2. Procédé de fabrication selon la revendication 1, **caractérisé en ce que** le pion (8, 8', 8") est injecté en un autre matériau, en particulier en un autre matériau synthétique que la partie profilée, de préférence en polypropylène.

3. Procédé de fabrication selon l'une quelconque des revendications précédentes, **caractérisé en ce que** la partie profilée (4, 5, 6, 7, 4', 4") est injectée au niveau d'une des extrémités du premier profil (2, 2', 2") de sorte à former un coin de profil d'étanchéité.
